# EUROPÄISCHE PATENTANMELDUNG

(11) **EP 3 051 232 A1**
(43) Veröffentlichungstag der Anmeldung: **03.08.2016**
(21) Anmeldenummer: 15194248.9
(22) Anmeldetag: 12.11.2015
(51) Int. Cl.: F25B 21/02

(54) **WÄRMEISOLIERTES UND TEMPERIERTES BEHÄLTNIS**

(30) Priorität: 29.01.2015 DE 102015001142; 20.05.2015 DE 102015006585
(71) Anmelder: Liebherr-Hausgeräte Lienz GmbH, 9900 Lienz (AT); Liebherr-Hausgeräte Ochsenhausen GmbH, 88416 Ochsenhausen (DE)
(72) Erfinder: Hiemeyer, Jochen, 97753 Karlstadt (DE); Kerstner, Martin, 97072 Würzburg (DE); Freitag, Michael, 97082 Würzburg (DE)
(74) Vertreter: Herrmann, Uwe

(57) **Zusammenfassung**

Die vorliegende Erfindung betrifft ein wärmeisoliertes und temperiertes Behältnis (1-5) mit einem Innenteil (1), das ausziehbar in dem Behältnis (1-5) gelagert ist und im Wesentlichen eine plattenartige Form aufweist, wobei die Gesamthöhe des Behältnisses (1-5) kleiner oder gleich 200 mm ist und wobei das temperierte Behältnis (1-5) als Einzelelement voll funktionsfähig ist.

## Beschreibung

Die vorliegende Erfindung betrifft ein wärmeisoliertes und temperiertes Behältnis, vorzugsweise eine Kühlvorrichtung mit einem Innenteil, das ausziehbar in dem Behältnis, vorzugsweise in der Kühlvorrichtung gelagert ist.

Herkömmliche Kühlvorrichtungen bzw. Kühl- und/oder Gefriergeräte weisen einen Grundkörper auf, der mit Hilfe einer an einer Seite des Grundkörpers angeschlagenen Tür eine wiederverschließbare Öffnung zu seinem gekühlten Innenraum aufweist. Hierbei ist es üblich den vorhandenen Kühlraum mit Hilfe mehrerer Unterteilungen in Fächer aufzuteilen, auf die dann jeweils eine bestimmte Anzahl von zu kühlenden Waren gestellt werden kann.

Typischerweise werden "flache" Kühlgüter, wie zum Beispiel Aufschnitt, Käse, Butter, Aufstriche oder dergleichen, im Kühlschrank häufig übereinander gestapelt und/oder hintereinander angeordnet, da der in dem Kühlschrank zur Verfügung stehende Platz eine andere Anordnungsweise nicht zulässt. Oftmals werden die einzelnen Kühlgüter auch in separaten Behältnissen, die luftdicht verschlossen werden können, aufbewahrt. Dies verhindert ein Austrocknen der Kühlgüter und unterbindet ein Verteilen der von dem Kühlgut abgegebenen Duftstoffe in den Innenraum der Kühlvorrichtung.

Für den Benutzer der Kühlvorrichtung ist jedoch daher eine schnelle und komfortable Entnahme eines Kühlguts meist nicht möglich, da es aufgrund seiner typischen Aufbewahrungsweise nicht unmittelbar herausgenommen werden kann und meist in einem separaten Behältnis aufbewahrt wird, das ebenfalls geöffnet werden muss.

Diese Überlegungen sind aber keineswegs auf Kühlvorrichtungen beschränkt sondern gelten für wärmeisolierte und temperierte Behältnisse im Allgemeinen.

Das wärmeisolierte Behältnis weist mindestens einen temperierten Innenraum auf, wobei dieser gekühlt oder beheizt sein kann, so dass sich in dem Innenraum eine Temperatur unterhalb oder oberhalb der Umgebungstemperatur von z.B. 21 °C ergibt.

Die Aufgabe der vorliegenden Erfindung ist es daher, ein temperiertes und wärmeisoliertes Behältnis, vorzugsweise eine Kühlvorrichtung vorzusehen, die die oben beschriebenen Probleme überwindet.

Dies gelingt mit einem Behältnis und vorzugsweise einer Kühlvorrichtung, die die Merkmale nach dem Anspruch 1 umfasst. Hierbei umfasst das Behältnis, vorzugsweise die Kühlvorrichtung ein Innenteil, das ausziehbar in dem Behältnis, vorzugsweise der Kühlvorrichtung gelagert ist und im Wesentlichen eine plattenartige Form aufweist. Die Kühlvorrichtung bzw. das Behältnis ist dadurch gekennzeichnet, dass deren bzw. dessen Gesamthöhe kleiner oder gleich 200 mm ist und sie bzw. es als Einzelelement voll funktionsfähig ist.

Das plattenartige Innenteil, das ausziehbar in dem Behältnis, vorzugsweise der Kühlvorrichtung gelagert ist, dient zur Aufnahme von zu temperierenden Gütern, vorzugsweise Kühlgütern und ermöglicht durch die Ausziehbarkeit bezüglich dem Behältnis, vorzugsweise der Kühlvorrichtung eine für den Benutzer besonders komfortable Stellung, in der Kühlgüter in einfacher Weise auf das Innenteil gelegt und weggenommen werden können. Das Innenteil ist vorzugsweise eine Schubladenplatte, die aus dem Behältnis, vorzugsweise der Kühlvorrichtung herausziehbar und in diese wieder einschiebbar ist.

Die Kühlvorrichtung bzw. das Behältnis zeichnet sich dadurch aus, dass deren bzw. dessen Gesamthöhe kleiner oder gleich 200 mm ist. Vorzugsweise ist die Gesamthöhe kleiner oder gleich 150 mm und in einer weiter bevorzugten Ausführungsform ist die Gesamthöhe kleiner oder gleich 100 mm. Die Gesamthöhe wird hierbei bestimmt, wenn das in das Behältnis, vorzugsweise in die Kühlvorrichtung eingeschobene Innenteil, das im Wesentlichen eine plattenartige Form aufweist, in etwa parallel zu einer Horizontalebene ausgerichtet ist. In diesem Fall wird die Gesamthöhe des Behältnisses bzw. der Kühlvorrichtung parallel zu einer Vertikalen ermittelt.

Ein weiteres optionales Merkmal der Erfindung ist, dass das Behältnis, vorzugsweise die Kühlvorrichtung genau ein ausziehbares Innenteil aufweist.

Ferner zeichnet sich das Behältnis, vorzugsweise die Kühlvorrichtung dadurch aus, dass sie als Einzelelement voll funktionsfähig ist.

Die geringe Höhe dieses Behältnisses, vorzugsweise dieser Kühlvorrichtung ist nur durch Fortschritte in der Dämmtechnologie zu erreichen, die eine Herstellung von effizienten thermoelektrischen Temperier- und vorzugsweise Kühleinrichtungen erlaubt. Dadurch wird es möglich kleine dezentrale Temperier- und vorzugsweise Kühlvorrichtungen vorzusehen, die in puncto Kosten und Energieverbrauch wettbewerbsfähig sind.

Bei einem klassischen Kompressorkühlschrank bzw. -temperierschrank sind durch die Baugrößen und Kosten der Komponenten des Wärmeübertragungskreislaufs bzw. des Kältesystems mit seinen Bauteilen, wie Verdichter, Verdampfer, Verflüssiger, Wärmeübertragungs- bzw. Kältemittel und Leitungen, Temperier- bzw. Kühlvorrichtungen mit einer solch geringen Gesamthöhe nicht sinnvoll umsetzbar. Mit Hilfe des erfindungsgemäßen temperierten Behältnisses, vorzugsweise der erfindungsgemäßen Kühlvorrichtung ist es zudem möglich eine dezentrale Temperier- bzw. Kühlvorrichtung in einen Schubladenverbund einzubringen, wobei nur eine der mehreren Schubladen aus dem Schubladenverbund eine temperierte, vorzugsweise eine gekühlte Schublade ist.

In einer Ausführungsform ist das Behältnis bzw. das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist das Behältnis bzw. das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Vorteil der Verwendung von thermoelektrischen Wärmepumpen ist in dieser Ausführungsform, dass die komplette EMV-Problematik lediglich am Netzteil auftritt.

So ist beispielsweise denkbar, dass in einem Küchenblock bzw. in einem Küchenunterschrank das erfindungsgemäße Behältnis, vorzugsweise die erfindungsgemäße Kühlvorrichtung vorhanden ist. Dabei ermöglicht die Erfindung nun eine temperierte und vorzugsweise eine gekühlte Schublade vorzusehen, die als separates Element in der Kücheninstallation vorhanden ist. So sind beim Aufziehen der Schublade die flachen zu temperierenden Güter, vorzugsweise Kühlgüter übersichtlich und komfortabel zugänglich, da ein Anordnen unterschiedlicher zu temperierender Güter, vorzugsweise unterschiedlicher Kühlgüter hintereinander durch die Ausziehbarkeit des Innenteils nicht mehr länger störend ist. Vorteilhafterweise kann das erfindungsgemäße Behältnis, vorzugsweise die erfindungsgemäße Kühlvorrichtung eine Schublade in einem Schubladenverbund darstellen, deren Schubladenfronten optisch einheitlich ausgeführt sind.

Vorzugsweise ist die Breite des Innenteils kleiner oder gleich 1000 mm, vorzugsweise kleiner oder gleich 600 mm, und besonders bevorzugterweise größer oder gleich 400 mm. Die Breite des Innenteils wird bestimmt in einer zur horizontalen parallelen Ausrichtung des Innenteils, wobei die Breitenkante des Innenteils, an der die Breite bestimmt wird, eine Stirnseite des Innenteils entspricht. Die Breitenrichtung definiert also mit der Höhenrichtung eine Ebene, die im Wesentlichen senkrecht zur Richtung eines Ausziehens oder Einschiebens des Innenteils orientiert ist, wenn das plattenartige Innenteil parallel zu einer Horizontalebene ausgerichtet ist.

Vorzugsweise ist die Tiefe des Innenteils kleiner oder gleich 1000 mm, vorzugsweise kleiner oder gleich 600 mm und ganz besonders bevorzugterweise größer oder gleich 400 mm. Die Tiefe des Innenteils wird entsprechend einer Richtung gemessen, die senkrecht zur Breiten- als auch zur Höhenrichtung ist.

Die Gesamtabmessungen des Behältnisses, vorzugsweise der Kühlvorrichtung sind vorzugsweise in der Breite kleiner oder gleich 1000 mm, vorzugsweise kleiner oder gleich 600 mm und ganz besonders bevorzugterweise größer oder gleich 400 mm. In der Tiefe ist das Behältnis, vorzugsweise die Kühlvorrichtung vorzugsweise kleiner oder gleich 1000 mm, vorzugsweise kleiner oder gleich 600 mm, und ganz besonders bevorzugterweise kleiner oder gleich 400 mm. Die Messung der Tiefe und der Breite erfolgt in einer analogen Weise wie die Bestimmung der Tiefe und der Breite des Innenteils.

In einer Ausführungsform ist die Breite der Kühlvorrichtung größer als deren Höhe. Die Möglichkeit einer solchen Gestaltung wird durch die Verwendung eines oder mehrerer thermoelektrischer Elemente als Wärmepumpe geschaffen.

Durch diese besonders kompakten Maße des Behältnisses, vorzugsweise der Kühlvorrichtung ist eine Aufnahme des Behältnisses, vorzugsweise der Kühlvorrichtung in eine Kücheninstallation, beispielweise als Schublade denkbar.

Ein weiteres optionales Merkmal des Behältnisses, vorzugsweise der Kühlvorrichtung ist das Vorsehen mehrerer von dem Innenteil lösbarer Aufbewahrungsbehältnisse an dem Innenteil.

Dadurch ist es möglich verschiedene zu temperierende Güter, vorzugsweise verschiedene Kühlgüter in jeweilige Aufbewahrungsbehältnisse einzubringen. Da die Aufbewahrungsbehältnisse zudem lösbar ausgeführt sind, ist es dem Benutzer des Behältnisses bzw. der Kühlvorrichtung möglich, die Aufbewahrungsbehältnisse einzeln von dem Innenteil abzuheben und in einer besonders komfortablen Weise zu dem in dem Aufbewahrungsbehältnis vorhandenen Gut, vorzugsweise Kühlgut zu gelangen.

Vorzugsweise sind die mehreren Aufbewahrungsbehältnisse auf dem ausziehbaren Innenteil angeordnet und sind von der zum Innenteil abgewandten Seite offen. Das bedeutet, dass die Aufbewahrungsbehältnisse eine Öffnung aufweisen, die dem Innenteil, auf dem sie positioniert werden können, abgewandt ist. Vorzugsweise weisen die Aufbewahrungsbehältnisse eine Schalenform auf. Dadurch kann ein Nutzer besonders einfach an das Gut, vorzugsweise das Kühlgut gelangen.

Nach einem weiteren optionalen Merkmal des Behältnisses bzw. der Kühlvorrichtung ist dieses bzw. diese ferner mit einer Deckplatte versehen, die die mehreren Aufbewahrungsverhältnisse in einem nicht ausgezogenen Zustand des Innenteils jeweils luftdicht verschließt. Hierbei ist vorzugweise die Deckplatte zu dem plattenartigen Innenteil parallel ausgerichtet. Vorzugsweise liegen hierzu alle Oberkanten der Öffnungen der Aufbewahrungsbehältnisse auf einem gemeinsamen Niveau, sodass die Deckplatte sämtlichen Öffnungen verschließen kann. Vorzugsweise ist zum Verschließen der Aufbewahrungsbehältnisse ein Mechanismus vorgesehen, der eine Relativbewegung der Aufbewahrungsbehältnisse zu der Deckplatte ermöglicht. Hierbei kommt also eine Bewegung der Deckplatte in Richtung des Innenteils, bzw. in Richtung der offenen Aufbewahrungsbehältnisse oder eine Bewegung des Innenteils in Richtung der Deckplatte in Frage. Durch dieses luftdichte und/oder geruchsdichte Verschließen der Aufbewahrungsbehältnisse kann die Vorhaltezeit der in den Aufbewahrungsbehältnissen abgelegten Güter, vorzugsweise Kühlgüter gesteigert werden.

Vorzugsweise ist die Deckplatte lösbar mit dem Behältnis bzw. der Kühlvorrichtung verbunden, um eine Entnahme zu Reinigungszwecken zu ermöglichen.

Vorzugsweise ist das Innenteil mit einem Verschlusselement des Behältnisses, vorzugsweise der Kühlvorrichtung verbunden, das das Behältnis bzw. die Kühlvorrichtung abschließt, wenn das Innenteil sich in einer nicht ausgezogenen Stellung befindet. So ist beispielsweise denkbar, dass ein Verschlusselement des Behältnisses bzw. der Kühlvorrichtung an einer Stirnseite des plattenförmigen Innenteils angeordnet ist. Zum Öffnen des Behältnisses bzw. der Kühlvorrichtung wird von einem Benutzer das mit dem Innenteil in Verbindung stehende Verschlusselement, dass eine ähnliche Position wie eine Schubladenfront aufweist, herausgezogen.

Nach einem weiteren optionalen Merkmal des Behältnisses und vorzugsweise der Kühlvorrichtung ist das Innenteil von dem Behältnis bzw. von der Kühlvorrichtung vollständig entkoppelbar und als Präsentationsplatte für darauf angeordnete Waren, die sich vorzugsweise in den Aufbewahrungsbehältern befinden, verwendbar. Dabei kann das Innenteil aus dem Behältnis bzw. aus der Kühlvorrichtung einfach herausgezogen werden, sodass in einer praktischen Art und Weise die auf dem Innenteil angeordneten Gütern, vorzugsweise Kühlgüter an einem von dem Behältnis bzw. von der Kühlvorrichtung unabhängigen Ort gebracht werden können. Dies vereinfacht die Entnahme von Gütern bzw. Kühlgütern und führt insgesamt zu einem schnelleren und effizienteren Entnahmevorgang.

Zudem kann das Behältnis, vorzugsweise die Kühlvorrichtung mit einem Sekundärverschlussmittel ausgestattet sein, das bei einem vollständigen Entkoppeln bzw. vollständigen Herausziehen des Innenteils von dem Behältnis bzw. von der Kühlvorrichtung eine Öffnung des Behältnisses bzw. der Kühlvorrichtung schließt. Dies kann zum Beispiel durch eine Klappe realisiert werden oder durch eine mit dem Innenteil verfährende Rückwand, die vorzugsweise an einem Schienensystem des Innenteils befestigt ist. So wird sichergestellt, dass auch bei einem Entnehmen des Innenteils aus dem Behältnis bzw. aus der Kühlvorrichtung der durch das Behältnis bzw. die Kühlvorrichtung zu temperierende bzw. zu kühlende Raum nicht in einem unverschlossenen Zustand verbleibt.

Vorzugsweise wird die Temperierung des Innenraums des Behältnisses, vorzugsweise die Kälteerzeugung in der Kühlvorrichtung durch ein thermoelektrisches Element, vorzugsweise ein Peltier-Element, durchgeführt.

Durch den Fortschritt in der Dämmtechnologie, ist es möglich, effiziente Temperierungs- und vorzugsweise Kühleinrichtungen mit Hilfe von thermoelektrischen Elementen aufzubauen. Die Dämmelemente basieren hierbei typischerweise auf einen durch eine Hochbarrierefolie diffusionsdicht abgeschlossenen Vakuumraum, der typischerweise mit Hilfe eines Vakuumdämmkörpers gebildet wird.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10-5 mbar * l / s *m² und besonders bevorzugt < 10-6 mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10-2 mbar * l / s * m² und besonders bevorzugt im Bereich von < 10-3 mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

In einer Ausführungsform ist zwischen einer den Innenraum begrenzenden Innenwand und einer Außenhaut des Behältnisses eine Wärmedämmung angeordnet ist, die aus einem Vollvakuumsystem besteht. Darunter ist eine Wärmedämmung zu verstehen, die ausschließlich oder überwiegend aus einem evakuierten Bereich besteht, der mit einem Kernmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Behältnisses und der Außenhaut des Behältnisses als Wärmedämmung ausschließlich ein solcher Folienkörper vorliegen, der einen durch eine vakuumdichte Folie umgebenen Bereich aufweist, in dem Vakuum herrscht und in dem ein Kernmaterial angeordnet ist. Eine Ausschäumung und/oder Vakuumisolationspaneele als Wärmedämmung oder eine sonstige Wärmedämmung außer dem Vollvakuumsystem zwischen der Innenseite und der Außenseite des Behältnisses sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus und/oder zwischen der Innenseite und der Außenseite eines Verschlusselementes, wie z.B. einer Tür, Klappe, Deckel oder dergleichen erstrecken.

Das Vollvakuumsystem kann so erhalten werden, dass eine Umhüllung aus einer gasdichten Folie mit einem Kernmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Weitere Vorteile und Einzelheiten der vorliegenden Erfindung werden nachfolgend anhand der in der Figur dargestellten Ausführungsform detailliert erläutert. Es zeigt:

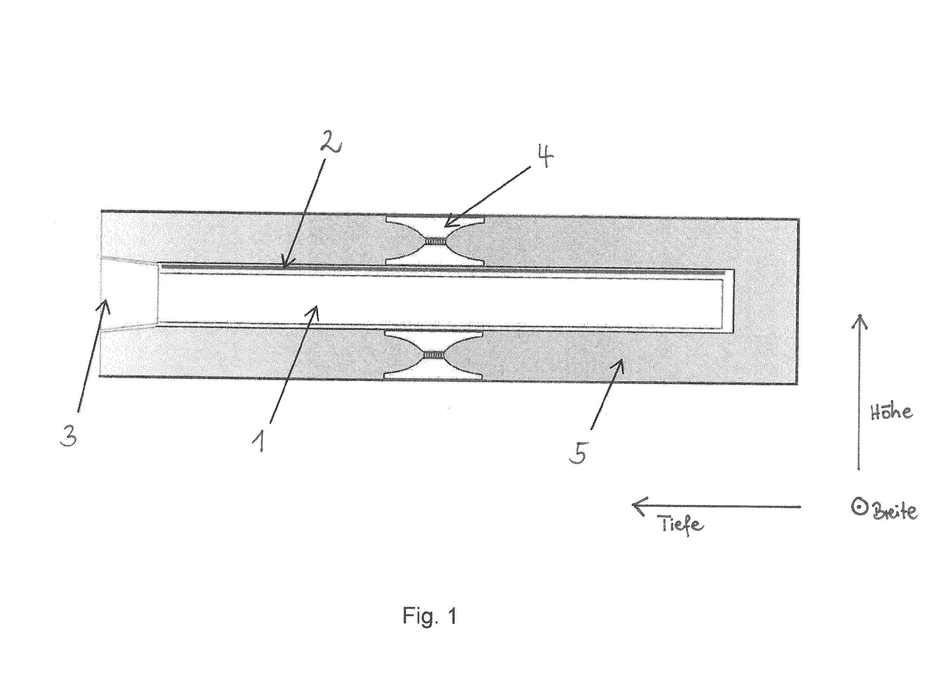

- Fig. 1:: eine Schnittansicht einer erfindungsgemäßen Kühlvorrichtung.

In Fig. 1 ist eine Schnittansicht entlang der Tiefenrichtung der Kühlvorrichtung zu sehen. Das Innenteil 1 ist hierbei innerhalb der Kühlvorrichtung ausziehbar gelagert. Zudem ist ein das Innenteil fast vollständig umgebenden Dämmbehälter 5 zu sehen, der das Innenteil 1 nur an seiner herausziehbaren Seite nicht umschließt. Der Dämmbehälter umfasst thermoelektrische Elemente 4, die derart angeordnet sind, dass der vom Dämmbehälter 5 geschaffene Zwischenraum, in dem das Innenteil 1 angeordnet ist durch die thermoelektrischen Elemente 4 gekühlt wird.

Ein Verschlusselement 3 schließt den durch den Dämmbehälter 5 gebildeten Raum nach außen hin ab. Das Verschlusselement 3 ist lösbar mit dem Innenteil 1 verbunden, sodass bei einem Herausziehen des Verschlusselements aus dem durch den Dämmbehälter 5 gebildeten Hohlraum das Innenteil 1 ebenfalls aus dem Hohlraum herausgezogen wird. Ferner ist in der Fig. 1 eine Deckplatte 2 zu erkennen, die in oder auf dem Innenteil angeordnete Aufbewahrungsbehältnisse luftdicht abschließt, wenn das Innenteil sich in einem eingefahrenen Zustand befindet.

Darüber hinaus sind ferner die Richtungen der Höhe, der Tiefe und der Breite der Kühlvorrichtung in der Fig. 1 angegeben. Die Breitenrichtung verläuft hierbei senkrecht zur Blattebene.

## Patentansprüche

1. Wärmeisoliertes und temperiertes Behältnis, vorzugsweise Kühlvorrichtung mit einem Innenteil, das ausziehbar in dem Behältnis, vorzugsweise in der Kühlvorrichtung gelagert ist und im Wesentlichen eine plattenartige Form aufweist,
**dadurch gekennzeichnet,**
**dass** die Gesamthöhe des Behältnisses, vorzugsweise der Kühlvorrichtung kleiner oder gleich 200 mm ist, und dass das temperierte Behältnis, vorzugsweise die Kühlvorrichtung als Einzelelement voll funktionsfähig ist.

2. Behältnis nach Anspruch 1, wobei die Breite des Innenteils oder des Behältnisses, vorzugsweise der Kühlvorrichtung kleiner oder gleich 1000 mm ist.

3. Behältnis nach einem der vorhergehenden Ansprüche, wobei das Innenteil mit mehreren von dem Innenteil lösbaren Aufbewahrungsbehältnissen versehen ist.

4. Behältnis nach Anspruch 3, wobei die mehreren Aufbewahrungsbehältnisse auf dem ausziehbaren Innenteil angeordnet sind und auf ihrer zum Innenteil abgewandten Seite offen sind, vorzugsweise weisen die Aufbewahrungsbehältnisse eine Schalenform auf.

5. Behältnis nach einem der Ansprüche 3 oder 4, ferner mit einer Deckplatte, die die mehreren Aufbewahrungsverhältnisse in einem nicht ausgezogenen Zustand des Innenteils jeweils luftdicht verschließt, wobei vorzugsweise die Deckplatte zu dem plattenartigen Innenteil parallel ausgerichtet ist.

6. Behältnis nach Anspruch 5, wobei die Deckplatte lösbar mit dem Behältnis, vorzugsweise mit der Kühlvorrichtung verbunden ist, um eine Entnahme zu Reinigungszwecken zu ermöglichen.

7. Behältnis nach einem der vorhergehenden Ansprüche, wobei das Innenteil mit einem Verschlusselement des Behältnisses, vorzugsweise der Kühlvorrichtung verbunden ist, das das Behältnis, vorzugsweise die Kühlvorrichtung abschließt, wenn das Innenteil sich in einer nicht ausgezogenen Stellung befindet.

8. Behältnis nach einem der vorhergehenden Ansprüche, wobei das Innenteil von dem Behältnis, vorzugsweise von der Kühlvorrichtung vollständig entkoppelbar ist und als Präsentationsplatte für darauf angeordnete Waren, die sich vorzugsweise in den Aufbewahrungsbehältern befinden, verwendbar.

9. Behältnis nach Anspruch 8, ferner mit einem Sekundärverschlussmittel, das bei einem vollständigen Entkoppeln des Innenteils von dem Behältnis, vorzugsweise von der Kühlvorrichtung eine Öffnung der Kühlvorrichtung schließt.

10. Behältnis nach einem der vorhergehenden Ansprüche, wobei eine Temperierung des Innenraums des Behältnisses, vorzugsweise eine Kälteerzeugung in der Kühlvorrichtung durch ein thermoelektrisches Element, vorzugsweise ein Peltier-Element, durchgeführt wird.

11. Behältnis nach einem der vorhergehenden Ansprüche, wobei zwischen einer den Innenraum des Behältnisses begrenzenden Innenwand und einer Außenhaut des Behältnisses eine Wärmedämmung angeordnet ist, die insgesamt oder bereichsweise aus einem Vollvakuumsystem besteht.
